# EUROPEAN PATENT APPLICATION

(11) **EP 2 153 712 A1**
(43) Date of publication of application: **17.02.2010**
(21) Application number: 08018767.7
(22) Date of filing: 28.10.2008
(51) Int. Cl.: A01D 43/063

(54) **A lawn mower having function of indicating full-filled status of grass bag**

(30) Priority: 12.08.2008 CN 200810021684
(71) Applicant: Yangzhou Weibang Garden Machine Co., Ltd, Yangzhou Jiangsu 225127 (CN)
(72) Inventor: Zheng, Xuzhong, Yangzhou Jiangsu 225127 (CN)
(74) Representative: Hörschler, Wolfram Johannes

(57) **Abstract**

The present invention discloses a lawn mower having function of indicating full-filled status of grass bag in garden machinery field, which mainly comprises a main unit (6), wherein, the main unit (6) is connected to one side of a grass bag (4) through an air chute (5), a mesh fabric (7) is provided around the grass bag (4), a cover plate (1) is provided above the mesh fabric (7) at upper part of the grass bag (4), an air channel (2) is arranged on the cover plate (1), and an indication fan (3) is arranged in the air channel (2). When the lawn mower operates, the air flow blows the indication fan (3) to rotate; as the cut grass is accumulated in the grass bag (4), the meshes on the mesh fabric (7) are filled gradually, and thereby the air flow through the meshes reduces gradually; when the air flow is not enough to drive the fan (3) to rotate, it indicates the grass bag (4) is full; in that way, the operator can judge timely that the grass bag is full and must be emptied once he finds the indication fan stop rotating. The lawn mower can reflect the grass collection condition accurately, so as to remind the operator of emptying the grass bag timely, and therefore provides effective overload protection for the blades and the engine.

## Description

### Field of the Invention

The present invention relates to a garden machine, in particular to a lawn mower.

### Background of the Invention

As people's living standard improves and the demand for beautifying the environment grows, lawn areas increase rapidly and therefore the lawn maintenance workload increases doubly, either for lawns in urban areas and residential community or for turfs in football fields and golf courses. In order to improve working efficiency and reduce labor intensity, a variety of automatic or semi-automatic wheel-type lawn mowers are more and more widely used.

At present, in mechanical mowing operations, the cut grass is usually treated by side discharging or collecting with grass bags. Collecting cut grass with grass bags omits the manual cut grass collection work, and has higher working efficiency. At present, a sort of lawn mower with grass bag is available in the market, which mainly comprises a main unit, wherein, the main unit is connected to one side of the grass bag through an air chute, and a mesh fabric is provided around the grass bag. When the main unit operates, the cut grass is collected through the air chute into the grass bag, while the excessive air is discharged through the meshes on the mesh fabric. However, since the grass bag is not provided with a device having function of indicating full-filled status, the operator can't judge whether the grass bag is full and needs cleaning during working, but has to decide by experience; or, the operator will learn that the grass bag needs to be emptied only when the cut grass blocks the air chute and disturbs rotation of the cutter blades. It may cause deformation of the cutter blades and engine overload and damage, and thereby cause increased maintenance cost.

### Summary of the Invention

The object of the present invention is to provide a lawn mower having function of indicating full-filled status of grass bag, so that the user can judge whether the grass bag is full or not quickly and thereby empty the grass bag timely, in order to avoid damage of the cutter blades and engine overload.

To achieve above objects, the lawn mower having function of indicating full-filled status of grass bag provided in present invention mainly comprises a main unit, wherein, the main unit is connected to one side of the grass bag through an air chute, and a mesh fabric is provided around the grass bag; a cover plate is provided above the mesh fabric at upper part of the grass bag, an air channel is arranged on the cover plate, and an indication fan is arranged in the air channel.

When the lawn mower operates, the cut grass is collected through the air chute into the grass bag and is accumulated there. During the discharge process of cut grass, the air that carries the cut grass into the grass bag flows out through the meshes on the mesh fabric; accordingly, some air flows through the air channel and drives the indication fan to rotate, and therefore the operator can learn that the air chute is unblocked and the cut grass can be discharged further into the grass bag; with the cut grass's accumulation in the grass bag, the meshes on the mesh fabric are filled gradually, and the blown-out air flow reduces gradually; when the air flow is not enough to drive the fan to rotate, it indicates the grass bag is full; in that way, the operator can judge timely that the grass bag is full and must be emptied once he finds the indication fan stop rotating. Compared to the prior art, the utility model can reflect the grass collection condition accurately, and reminds the operator of emptying the grass bag timely, and therefore provides effective overload protection for the blades and the engine.

### Brief Description of the Drawings

Fig. 1 is a structural representation of the present invention.
Fig. 2 is a partial enlarged drawing of the indication fan shown in Fig. 1.

### Detailed Description of the Embodiments

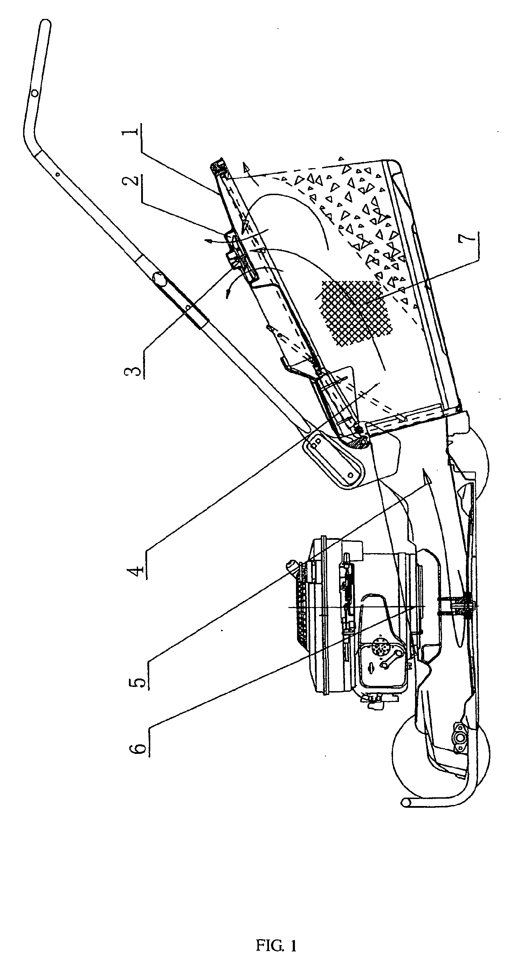

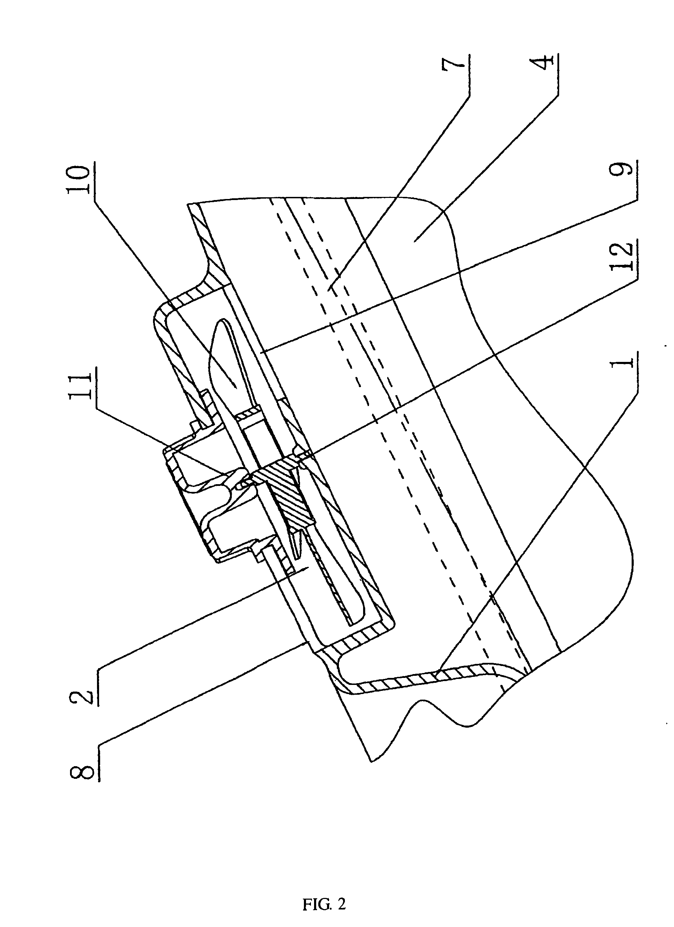

As shown in Fig. 1 and Fig. 2, the lawn mower having function of indicating full-filled status of grass bag comprises a main unit (6), wherein, the main unit (6) is connected to one side of a grass bag (4) through an air chute (5), a mesh fabric (7) is arranged around the grass bag (4), a cover plate (1) is provided above the mesh fabric (7) at upper part of the grass bag, an air channel (2) is arranged on the cover plate (1), and an indication fan (3) is provided in the air channel (2); the air channel (2) is in cylindrical form, with an air inlet (9) at the bottom and an air outlet (8) at the top; the indication fan (3) comprises a impeller (10) axially mounted in the air channel (2), one end of the impeller shaft is mounted in a bearing socket (12) on the cover plate (1), and the other end of the impeller shaft is mounted on a bearing cover (11) fixed to the cover plate (1); the air outlet (8) is arranged on the bearing cover (11); proper lubrication is required between the impeller (10), the bearing cover, and the bearing socket, so that the impeller (10) can rotate in feeble air flow.

When the main unit (6) operates, the cut grass is collected through the air chute (5) into the grass bag (4) and is accumulated there. During the cut grass discharge process, the air that carries the cut grass into the grass bag (4) flows out through the meshes on the mesh fabric (7); accordingly, some air flows through the air channel (2) and drives the indication fan (3) to rotate; as the cut grass is accumulated in the grass bag (4), the meshes on the mesh fabric (7) are filled gradually, and the blown-out air flow reduces gradually; when the air flow is not enough to drive the fan (3) to rotate, it indicates the grass bag is full; in that way, the operator can judge timely that the grass bag is full and must be emptied once he finds the indication fan (3) stop rotating.

### Reference numeral list

- 1: cover plate
- 2: air channel
- 3: indication fan
- 4: grass bag
- 5: air chute
- 6: main unit
- 7: mesh fabric
- 8: air outlet
- 9: air inlet
- 10: impeller
- 11: bearing cover
- 12: bearing sockez

## Claims

1. A lawn mower having function of indicating full-filled status of grass bag (14), which comprises a main unit connected to one side of the grass bag (4) through an air chute (5), a mesh fabric (7) is provided around the grass bag (4), wherein, a cover plate (1) is provided above the mesh fabric (7) at upper part of the grass bag (4), an air channel is arranged on the cover plate (1), and an indication fan (3) is arranged in the air channel.

2. The lawn mower having function of indicating full-filled status of grass bag (4) according to claim 1, wherein, the air channel is in cylindrical form, with an air inlet (9) at the bottom and an air outlet (8) at the top; the indication fan (3) comprises an impeller (10) that is axially mounted in the air channel, one end of the impeller shaft is mounted in a bearing socket (12) set on the cover plate, and the other end of the impeller shaft is mounted on a bearing cover (11) fixed to the cover plate (1); the air outlet (8) is arranged on the bearing cover (11).
